# EUROPÄISCHE PATENTANMELDUNG

(11) **EP 2 337 180 A2**
(43) Veröffentlichungstag der Anmeldung: **22.06.2011**
(21) Anmeldenummer: 10015562.1
(22) Anmeldetag: 13.12.2010
(51) Int. Cl.: H02J 7/00

(54) **Vorrichtung zum Erzeugen einer gestützten Gleichspannung**

(30) Priorität: 15.12.2009 DE 102009058316
(71) Anmelder: Giesecke & Devrient GmbH, 81677 München (DE)
(72) Erfinder: Baldischweiler, Michael, 81825 München (DE)

(57) **Zusammenfassung**

Die Erfindung betrifft einen Ladeschaltkreis (3) zum Laden eines Kondensators (2), wobei der Ladeschaltkreis (3) eingerichtet ist, in Abhängigkeit eines Schaltsignals einen ersten Ladestrom (I_{L1}) oder einen zweiten Ladestrom (I_{L2}) zum Laden des Kondensators (2) zu erzeugen. Die Erfindung betrifft weiterhin eine Vorrichtung (100) zum Erzeugen einer gestützten, ausgehenden Gleichspannung (U_{A}) aus einer eingehenden Gleichspannung (U_{E}), umfassend eine Abtrenneinrichtung (5), die die ausgehende Gleichspannung (U_{A}) von der eingehenden Gleichspannung (U_{E}) abtrennt, wenn der Wert der eingehenden Gleichspannung (U_{E}) kleiner als der Wert der ausgehenden Gleichspannung (U_{A}) ist, einen Kondensator (2), vorzugsweise einen Doppelschichtkondensator, und einen Schalter (4), der bei daran angelegtem Stützsignal einen Eingang des Kondensators (2) mit der ausgehende Gleichspannung (U_{A}) verbindet, vorzugsweise kurzschließt, wodurch die ausgehende Gleichspannung (U_{A}) gestützt wird.

## Beschreibung

Die vorliegende Erfindung betrifft einen Ladeschaltkreis zum Laden eines Kondensators, eine Vorrichtung zum Erzeugen einer gestützten, ausgehenden Gleichspannung aus einer eingehenden Gleichspannung, eine Schalteinrichtung, umfassend eine derartige Vorrichtung, ein USB-Gerät, umfassend eine derartige Schalteinrichtung, sowie zugehörige Betriebsverfahren.

Vorrichtungen, die Instabilitäten in Versorgungsspannungen abfangen und auch bei Wegfall einer eingehenden Gleichspannung einer Gleichspannungsquelle, zumindest für eine gewisse Zeit eine ausreichende Gleichspannung zur Verfügung stellen können, sind bekannt. Solche Vorrichtungen erzeugen somit aus einer eingehenden Gleichspannung eine gestützte, ausgehende Gleichspannung. Sie werden zur stabilisierten Versorgung von Verbrauchern mit elektrischer Energie eingesetzt und als unterbrechungsfreie Stromversorgungen (USV) bezeichnet. Sie stellen einen sicheren Nachlauf eines Geräts bei Wegfall der eingehenden Gleichspannung während einer gewissen Nachlaufzeit sicher. Häufig werden derartige Vorrichtungen zur Versorgung von Datenverarbeitungseinrichtungen wie Mikrocontrollern eingesetzt, wenn beispielsweise sichergestellt werden soll, dass der Mikrocontroller auch bei Wegfall der Versorgungsspannung noch bestimmte Prozesse abschließen kann.

Derartige Vorrichtungen zum Erzeugen einer gestützten Gleichspannung umfassen eine Einrichtung zum Speichern von elektrischer Energie. Hierfür kommen je nach Anwendungsgebiet vor allem Akkumulatoren oder Kondensatoren in Frage. In Akkumulatoren kann im Vergleich zu Kondensatoren eine große Menge an elektrischer Energie gespeichert werden, so dass Geräte mit hoher Leistungsaufnahme während einer relativ langen Nachlaufzeit versorgt werden können. Jedoch sind Akkumulatoren für niedrige Betriebstemperaturen (z.B. unterhalb von -5 °C) nur sehr eingeschränkt geeignet und benötigen relativ aufwändige Ladeschaltungen, um beispielsweise das Auftreten des so genannten Memoryeffekts in solchen Akkumulatoren zu vermeiden und damit eine akzeptable Lebensdauer des Akkumulators, von beispielsweise mehreren Jahren, zu erzielen.

Zur unterbrechungsfreien Versorgung von Verbrauchern und Geräten mit moderater oder geringer Leistungsaufnahme mit einer gestützten Gleichspannung über einen vergleichsweise kurzen Zeitraum werden dagegen in der Regel Kondensatoren eingesetzt, beispielsweise zur Versorgung einer Recheneinheit, wie einem Mikroprozessor, Geräten, die über eine USB-Schnittstelle mit elektrischer Energie versorgt werden, Kontaktlosgeräten, die elektrische Energie über eine Luftschnittstelle beziehen, sowie sonstigen Geräten mit moderatem Stromverbrauch. Die in einem Kondensator gespeicherte elektrische Energiemenge E berechnet sich zu E = ½· C U ², wobei U die Spannung an dem Kondensator der Kapazität C ist. Folglich beträgt die dem Kondensator entnehmbare Energiemenge bei einer Kondensatorkapazität von 20 mF und einer zu stützenden Nennspannung von 5 V, die bis 4 V abfallen darf, 90 mJ. Für derart geringe Energiemengen genügen in der Regel einfach aufgebaute Kondensatoren, besonders wenn nur kurze Nachlaufzeiten benötigt werden. Für größere Energiemengen werden häufig Doppelschichtkondensatoren (auch bekannt als Superkondensatoren mit Bezeichnungen wie Goldcap, Supercap, BoostCap oder Ultracap) eingesetzt, die über Kapazitäten bis zu mehreren Farad verfügen. Mit solchen Doppelschichtkondensatoren ist es möglich, eine unterbrechungsfreie Stromversorgung von Einrichtungen mit vergleichsweise hoher Leistungsaufnahme bereitzustellen und/oder eine entsprechend lange Nachlaufzeit zu realisieren.

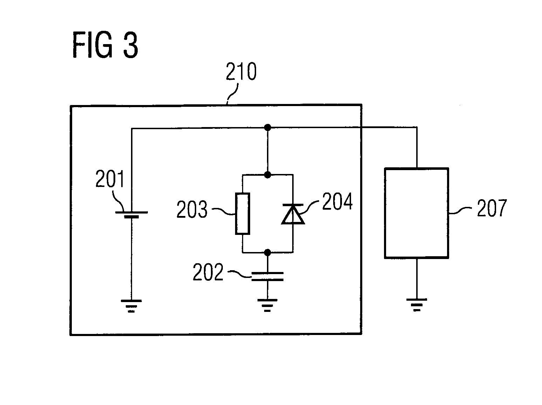

Ein herkömmlicher Schaltkreis 210 zum derartigen Stützen einer Gleichspannung zum Schaffen einer unterbrechungsfreien Stromversorgung ist in Figur 3 dargestellt. Bei diesem Schaltkreis 210 ist ein zum Stützen einer Gleichspannung einer Gleichspannungsquelle 201 dienender Kondensator 202 über einen Widerstand 203 an die Gleichspannungsquelle 201 angeschlossen. Die parallel zu dem Widerstand 203 geschaltete Diode 204 ist beim Laden des Kondensators 202 in Sperrrichtung gepolt. An die Gleichspannungsquelle 201 ist ein Verbraucher 207 angeschlossen, beispielsweise ein Mikroprozessor. Sobald die Spannung der Gleichspannungsquelle 201 unter die Spannung des Kondensators 202 abfällt, wird der Verbraucher 207 von dem Kondensator 202 mit elektrischer Energie versorgt. Dabei ist die Diode 204 in Durchlassrichtung gepolt. Der Strom von dem Kondensator 202 fließt daher nicht über den Widerstand 203 zu dem Verbraucher, was zu einer Verlustleistung und einem Spannungsabfall führen würde. Allerdings fällt über diese Diode 204 dennoch eine Spannung ab. Diese hängt vom Typ der verwendeten Diode 204 ab und liegt bei Schottky- und Germanium-Dioden bei ca. 0,3 V und bei Siliziumdioden bei ca. 0,6 V. Zudem findet bei Instabilitäten der Gleispannungsquelle 201 gegebenenfalls ein ungewolltes Entladen des Kondensators 202 über diese Gleichspannungsquelle 201 statt, wodurch sich der Kondensator 202 schneller entlädt und sich entsprechend die Nachlaufzeit verringert.

Nach dem Anschalten des Schaltkreises 210 muss der anfänglich ungeladene Kondensator 202 zunächst geladen werden. Der Ladestrom des Kondensators 202 ist dabei proportional zu I₀ exp [-t/(R · C)], wobei exp die Exponentialfunktion ist, t die verstrichene Ladezeit, R der Wert des Widerstands 203, C die Kapazität des Kondensators 202, I₀ der Strom bei t = 0, der indirekt proportional zu R ist. Dies bedeutet, der Ladestrom ist zu Beginn des Ladevorgangs am höchsten und fällt dann exponentiell bis auf Null ab. Falls der Widerstand R klein gewählt wird, ergeben sich sehr große anfängliche Ladeströme (z.B. 20 A bei einer Spannung U von 5 V und einem Widerstand R von 250 mΩ). Um eine Gleichspannungsquelle 201 mit einer moderaten Ausgangsleistung und einem moderaten Maximalstrom, wie sie beispielsweise in einem USB-Host Verwendung findet, nicht zu überlasten, muss daher ein hoher Widerstand R gewählt werden. Hierdurch ergeben sich aber entsprechend lange Ladezeiten für den Kondensator 202, vor allem wenn dieser eine hohe Kapazität aufweist. Doppelschichtkondensatoren werden daher bislang zum Stützen der Spannungsversorgung von USB-Geräten bzw. USB-Clients, die von einem USB-Host über eine USB-Schnittstelle mit elektrischer Energie versorgt werden, nicht eingesetzt.

Aufgabe der vorliegenden Erfindung ist es daher, einen Ladeschaltkreis zum Laden eines Kondensators anzugeben, der einen Kondensator in kurzer Zeit auflädt, ohne dabei eine Gleichspannungsquelle zu überlasten. Aufgabe der vorliegenden Erfindung ist es weiterhin, eine unterbrechungsfreie Stromversorgung mit einer effizienten Spannungsversorgung und einer langen Nachlaufzeit zu realisieren.

Diese Aufgaben werden durch einen Ladeschaltkreis, eine Vorrichtung zum Erzeugen einer gestützten, ausgehenden Gleichspannung aus einer eingehenden Gleichspannung sowie zugehörige Betriebsverfahren gemäß den unabhängigen Ansprüchen gelöst. Diese Aufgaben werden weiterhin durch eine Schalteinrichtung, umfassend eine Vorrichtung zum Erzeugen einer gestützten, ausgehenden Gleichspannung, und ein USB-Gerät, umfassend eine derartige Schalteinrichtung, sowie zugehörige Betriebsverfahren gelöst. In davon abhängigen Ansprüchen sind vorteilhafte Ausgestaltungen und Weiterbildungen der Erfindung angegeben.

Der erfindungsgemäße Ladeschaltkreis zum Laden eines Kondensators erzeugt in Abhängigkeit eines Schaltsignals einen ersten Ladestrom oder einen zweiten Ladestrom zum Laden des Kondensators. Der Ladeschaltkreis stellt somit alternativ einen ersten oder einen zweiten Ladestrom zur Verfügung, wobei erster und zweiter Ladestrom bevorzugt voneinander verschiedene Werte annehmen. Somit kann der Ladestrom, mit dem der Kondensator geladen wird, variiert werden.

Wird der Ladeschaltkreis durch eine Spannungsquelle, beispielsweise eine Gleichspannungsquelle, versorgt, so ermöglicht es der variabel einstellbare Ladestrom, zugleich die resultierende Belastung der Spannungsquelle durch den erfindungsgemäßen Ladeschaltkreis entsprechend zu variieren. Dadurch kann die durch den Ladeschaltkreis erzeugte Belastung an eine sich ändernde zulässige oder mögliche Belastung der Spannungsquelle angepasst werden. Somit kann der Kondensator zu jeder Zeit mit einem der maximalen Belastung der Spannungsquelle entsprechenden hohen, insbesondere maximalen Ladestrom geladen werden, ohne die jeweilige maximale Belastung der Spannungsquelle durch den Ladeschaltkreis zu überschreiten. Beispielsweise kann der Kondensator mit dem geringeren Ladestrom geladen werden, wenn die zulässige oder mögliche Belastung der Spannungsquelle durch den Ladeschaltkreis ein Laden mit dem höheren Ladestrom nicht zulässt. Umgekehrt kann der Kondensator mit dem höheren Ladestrom geladen werden, wenn die zulässige oder mögliche Belastung der Spannungsquelle dies zulässt. Eine sich ändernde zulässige oder mögliche Belastung einer Spannungsquelle kann sich beispielsweise dann ergeben, wenn mehrere Verbraucher von der Spannungsquelle versorgt werden und sich die Anzahl der Verbraucher oder die von diesen auf die Spannungsquelle ausgeübte Belastung zeitlich verändert.

In bekannten Ladeschaltkreisen steht zum Laden des Kondensators nur ein einziger Ladestrom zur Verfügung. Daher muss ein solcher Ladeschaltkreis abgeschaltet werden, wenn dadurch die zulässige oder mögliche Belastung der Spannungsquelle überschritten werden würde. Der erfindungsgemäße Ladeschaltkreis gestattet dagegen ein Laden des Kondensators, auch wenn eine nur geringe Belastung der Spannungsquelle möglich oder zulässig ist. Dadurch wird das Laden des Kondensators optimiert und die Ladezeit des Kondensators reduziert.

Der Begriff Ladestrom ist derart zu verstehen, dass ein Strom größer Null fließt. Bei einem gegebenen Ladezustand des Kondensators unterscheidet sich der Wert des ersten Ladestroms von dem Wert des zweiten Ladestroms. Das Schaltsignal kann beispielsweise ein Signal von einer externen Einrichtung, einer Steuereinrichtung, einer Recheneinheit, wie einem Mikrocontroller oder dergleichen sein.

Beispielsweise wird zunächst der geringere, beispielsweise erste Ladestrom abgegeben und damit die Spannungsquelle nur geringfügig belastet. Nach Erhalt des Schaltsignals wird der höhere, zweite Ladestrom abgegeben.

Bevorzugt ist der Ladeschaltkreis derart eingerichtet, dass der Wert des ersten Ladestroms einen ersten vorbestimmten Ladestromwert nicht übersteigt, und/oder der Wert des zweiten Ladestroms einen zweiten vorbestimmten Ladestromwert nicht übersteigt, wobei der zweite vorbestimmte Ladestromwert größer als der erste vorbestimmte Ladestromwert ist.

Die Ladestromwerte bilden somit Obergrenzen für den Wert der jeweiligen Ladeströme. Damit wird sichergestellt, dass die tatsächlich ausgeübte Belastung einer Spannungsquelle eine vorgegebene Belastung, wie die mögliche oder zulässige Belastung der Spannungsquelle, nicht überschreitet. Dabei müssen der erste und der zweite Ladestrom nicht notwendigerweise konstant sein und können beispielsweise vom Ladezustand des Kondensators abhängen. Der Ladeschaltkreis verfügt dementsprechend vorzugsweise über eine Einrichtung zur Ladestrombegrenzung.

Vorzugsweise ist der Ladeschaltkreis derart eingerichtet, dass der Wert des ersten Ladestroms konstant und gleich dem ersten Ladestromwert ist und/oder der Wert des zweiten Ladestroms konstant und gleich dem zweiten Ladestromwert ist. Der Ladeschaltkreis umfasst dazu vorzugsweise eine, zwei oder mehrere Konstantstromquellen, die in Abhängigkeit des Schaltsignals alternativ oder kumulativ betrieben werden. Dies ermöglicht es, den Ladestrom, mit dem der Kondensator geladen wird, derart so zu variieren, dass er zwei unterschiedliche vorbestimmte Ladestromwerte annimmt, und damit die Belastung der Spannungsquelle an deren Belastbarkeit anzupassen.

Der Ladeschaltkreis umfasst bevorzugt einen ersten und einen zweiten Ladeteilschaltkreis, wobei der erste Ladeteilschaltkreis den ersten Ladestrom abgibt, und der zweite Ladeteilschaltkreis einen weiteren Ladestrom abgibt, der den zweite Ladestrom bildet oder in Summe mit dem ersten Ladestrom den zweiten Ladestrom ergibt. Vorzugsweise umfassen die beiden Ladeteilschaltkreise jeweils Einrichtungen zur Ladestrombegrenzung auf den jeweiligen Ladestromwert oder Konstantstromquellen, die beispielsweise mit der Spannungsquelle versorgt werden.

Eine erfindungsgemäße Vorrichtung zum Erzeugen einer gestützten, ausgehenden Gleichspannung aus einer eingehenden Gleichspannung umfasst eine Abtrenneinrichtung, einen Kondensator und einen Schalter. Die Abtrenneinrichtung trennt die ausgehende Gleichspannung von der eingehenden Gleichspannung ab, wenn der Wert der eingehenden Gleichspannung kleiner als der Wert der ausgehenden Gleichspannung ist. Der Schalter verbindet bei daran angelegtem Stützsignal einen Eingang des Kondensators mit der ausgehenden Gleichspannung, wodurch die ausgehende Gleichspannung gestützt wird. Dieses Verbinden erfolgt vorzugsweise durch Kurzschließen des Eingangs des Kondensators mit der ausgehenden Gleichspannung.

Bei der Abtrenneinrichtung handelt es sich um eine Einrichtung, die einen Stromfluss von einer Ausgangsleitung, das heißt einem Stromleiter, an dem die ausgehende Gleichspannung anliegt, zu einer Eingangsleitung, das heißt einem Stromleiter, an dem die eingehende Gleichspannung anliegt, verhindert, wenn die eingehende Gleichspannung kleiner ist als die ausgehende Gleichspannung. Dies ist beispielsweise dann der Fall, wenn die eingehende Gleichspannung abfällt und die ausgehende Gleichspannung durch den Kondensator gestützt wird. Andererseits gestattet die Abtrenneinrichtung einen Stromfluss von der Eingangsleitung zu der Ausgangsleitung, wenn die eingehende Gleichspannung größer als die ausgehende Gleichspannung ist oder die eingehende Gleichspannung im Wesentlichen gleich der ausgehenden Gleichspannung ist, wie dies bei stabil anliegender eingehender Spannung, das heißt im Normalbetrieb, der Fall ist. Die Abtrenneinrichtung ist vorzugsweise eine Diode, beispielsweise Halbleiterdiode wie eine Siliziumdiode, eine Germaniumdiode, oder eine Metall-Halbleiterdiode, wie eine Schottky-Diode, wie sie beispielsweise auch zur Gleichrichtung von Strömen verwendet werden können. Die Abtrenneinrichtung sorgt dafür, dass nur die ausgehende Gleichspannung durch den Kondensator stabilisiert wird. Dies hat einerseits den Vorteil, dass der Kondensator bei Abfallen der eingehenden Gleichspannung nicht über die Spannungsquelle ungewollt entladen und somit eine längere Nachlaufzeit des Kondensators erreicht wird. Zudem kann ein Abfallen der eingehenden Gleichspannung zuverlässig und schnell erkannt werden.

Das Stützsignal kann ein Impulssignal oder ein permanentes Signal sein. Nach Abgeben des Stützsignals als Impulssignal oder bei Anlegen des Stützsignals als permanentes Signal an den Schalter der erfindungsgemäßen Vorrichtung wird der Schalter geschlossen und ein Eingang des Kondensators mit der Ausgangsleitung verbunden, wodurch der Kondensator als Stützkondensator wirkt, der die ausgehende Gleichspannung stützt und stabilisiert. Die erfindungsgemäße Vorrichtung arbeitet bei geschlossenem Schalter somit als unterbrechungsfreie Stromversorgung (USV) für Verbraucher, die mit der gestützten, ausgehenden Gleichspannung versorgt werden. Erfindungsgemäß wird das Stützsignal an den Schalter angelegt, wenn der Ladungszustand des Kondensators einen vorbestimmten ersten Schwellenwert überschritten hat.

Der Schalter kann ein beliebiger Schalter, wie ein mechanischer Schalter, beispielsweise ein Relais, oder ein elektronischer Schalter, wie beispielsweise ein Transistor, sein. Im Falle eines permanenten Stützsignals ist der Schalter bei Anliegen des Stützsignals vorzugsweise geschlossen, in Abwesenheit des Stützsignals vorzugsweise geöffnet. Der Schalter hat vorzugsweise einen geringen elektrischen Widerstand, so dass am geschlossenen Schalter eine nur geringe, vorzugsweise vernachlässigbare Spannung abfällt. Besonders bevorzugt ist der elektrische Widerstand des geschlossenen Schalters Null, so dass keine Spannung am geschlossenen Schalter abfällt. Daher steht durch das Verbinden des Kondensators mit der ausgehenden Gleichspannung die am Kondensator anliegende Spannung im Wesentlichen vollständig zur Stützung der ausgehenden Gleichspannung zur Verfügung. Zudem bietet der Schalter die Möglichkeit, die elektrische Verbindung zwischen Kondensator und der ausgehenden Gleichspannung abzutrennen, wenn unter bestimmten Umständen eine Stützung der ausgehenden Gleichspannung nicht benötigt wird und/oder ein Entladen des Kondensators vermieden werden soll.

Im Normalbetrieb ist - abgesehen von einem Spannungsabfall an der Diode - der Wert der eingehenden Gleichspannung gleich dem Wert der gestützten, ausgehenden Gleichspannung. Wird beispielsweise nur eine niedrigere Gleichspannung zur Versorgung eines Verbrauchers benötigt, so umfasst die Vorrichtung vorzugsweise zudem eine Spannungsreduziereinrichtung, die die ausgehende Gleichspannung auf eine niedrigere Gleichspannung als die eingehende Gleichspannung reduziert. Somit steht zur Stützung der ausgehenden Gleichspannung der Energieinhalt des Kondensators zur Verfügung, der sich aus der Differenz zwischen dem Wert der eingehenden Gleichspannung und dem Wert der niedrigeren, reduzierten Gleichspannung ergibt. Diese Differenz schafft somit einen Pufferbereich zur Stützung der ausgehenden Gleichspannung und die Stützung der ausgehenden Gleichspannung kann sichergestellt werden, wenn die Spannung des Kondensators oberhalb der niedrigeren, reduzierten Gleichspannung liegt. Wird die erfindungsgemäße Vorrichtung als unterbrechungsfreie Stromversorgung verwendet, kann somit ein entsprechend langer Nachlauf sichergestellt werden.

Im Normalbetrieb, das heißt vor Wegfall der eingehenden Gleichspannung, ist - abgesehen von einem Spannungsabfall an der Diode - der Wert der eingehenden Gleichspannung gleich dem Wert der gestützten, ausgehenden Gleichspannung, welcher - abgesehen von einem Spannungsabfall an dem geschlossenen Schalter - gleich dem Wert der an dem Kondensator anliegenden Spannung ist. Nach Absinken oder Wegfall der eingehenden Gleichspannung sinkt der Wert der an dem Kondensator anliegenden Spannung und somit der Wert der ausgehenden Gleichspannung in Abhängigkeit der von einem Verbraucher benötigten elektrischen Energie ab. Solange die ausgehende Gleichspannung größer als die niedrigere, reduzierte Gleichspannung ist, ist die von der Spannungsreduziereinrichtung erzeugte niedrigere, reduzierte Gleichspannung stabil und ein Verbraucher kann betrieben werden. Somit ermöglicht das Vorsehen einer Spannungsreduziereinrichtung die Verwendung der erfindungsgemäßen Vorrichtung als unterbrechungsfreie Stromversorgung mit einer verlängerten Nachlaufzeit. Die dem Kondensator entnehmbare Energie und somit die Nachlaufzeit steigt, je größer die Differenz zwischen eingehender Gleichspannung und niedrigerer, reduzierter Spannung ist.

Bei dem Kondensator handelt es sich vorzugsweise um einen Kondensator mit hoher Kapazität. Dazu eignen sich vor allem Doppelschichtkondensatoren. Zum Laden des Kondensators umfasst die erfindungsgemäße Vorrichtung vorzugsweise einen erfindungsgemäßen Ladeschaltkreis.

Eine erfindungsgemäße Schalteinrichtung umfasst eine erfindungsgemäße Vorrichtung zum Erzeugen einer gestützten, ausgehenden Gleichspannung sowie eine Recheneinheit, wobei die Recheneinheit mit der ausgehenden Gleichspannung versorgt wird.

Die Recheneinheit bildet somit einen Verbraucher für die gestützte, ausgehende Gleichspannung. Falls die Recheneinheit mit einer niedrigeren als die ausgehende Gleichspannung versorgt werden kann, ist die erfindungsgemäße Vorrichtung vorzugsweise mit einer Spannungsreduziereinrichtung ausgestattet. Dabei schafft, wie erwähnt, die Spannungsdifferenz zwischen der eingehenden Gleichspannung und der niedrigeren, reduzierten Gleichspannung einen Pufferbereich, in dem der Kondensator die Recheneinheit mit einer stabilen, ausreichenden Spannung versorgen kann.

Die Recheneinheit überwacht in der erfindungsgemäßen Schalteinrichtung vorzugsweise einen Ladungszustand des Kondensators zumindest während des Ladens des Kondensators, besonders bevorzugt mit Hilfe einer ersten Spannungsmessvorrichtung, und gibt das Stützsignal an den Schalter ab, wenn der Ladungszustand des Kondensators einen den Ladungszustand beschreibenden, vorbestimmten ersten Schwellenwert überschreitet. Vorzugsweise erzeugt die Recheneinheit auch das abzugebende Stützsignal. Die erste Spannungsmessvorrichtung kann durch einen A/D-Wandler mit geeigneter Signalverarbeitung oder eine Mikroprozessorschaltung realisiert werden.

Das Stützsignal kann in Form eines Impulssignals oder in Form eines permanenten Signals ausgegeben werden. Das Stützsignal wird ausgegeben, sobald der Ladungszustand des Kondensators den ersten Schwellenwert überschritten hat und die ausgehende Gleichspannung gestützt werden soll. Dazu wird der Schalter der erfindungemäßen Vorrichtung geschlossen. Der erste Schwellenwert ist derart bemessen, dass beim Verbinden des Eingangs des Kondensators mit der ausgehenden Gleichspannung, die die eingehende Gleichspannung liefernde Spannungsquelle nicht überlastet wird. Liegt die eingehende Gleichspannung bei 5 V, so liegt der vorbestimmte erste Schwellenwert beispielsweise bei 4,3 V. Die Recheneinheit überwacht den Ladungszustand des Kondensators zumindest während des Ladens des Kondensators.

Der Schalter kann wieder geöffnet werden, wenn eine Stützung der ausgehenden Gleichspannung nicht mehr benötigt wird, nicht mehr sinnvoll möglich ist oder ein Entladen des Kondensators vermieden werden soll, um beispielsweise einen späteren Ladevorgang des Kondensators zu verkürzen.

Da das Stützsignal von der Recheneinheit ausgegeben wird, die zugleich den Ladungszustand des Kondensators überwacht, kann die auf dem Kondensator gespeicherte Ladung effektiv kontrolliert werden, vor allem Ladezeiten minimiert und der Ladestrom zum Laden des Kondensators maximiert werden.

Die Recheneinheit ist in der erfindungsgemäßen Schalteinrichtung bevorzugt eingerichtet, die eingehende Gleichspannung, besonders bevorzugt mit Hilfe einer zweiten Spannungsmessvorrichtung, zu überwachen, und wenn die eingehende Gleichspannung (U_{E}) einen vorbestimmten zweiten Schwellenwert unterschreitet, einen vorbestimmten Betriebsmodus der Recheneinheit zu aktivieren. Auch die zweite Spannungsmessvorrichtung kann durch einen A/D-Wandler mit geeigneter Signalverarbeitung oder eine Mikroprozessorschaltung realisiert werden.

Der zweite Schwellenwert ist vorzugsweise derart bemessen, dass die eingehende Gleichspannung unterhalb dieses Wertes nicht mehr zur Sicherstellung einer ausreichenden ausgehenden oder gegebenenfalls reduzierten Gleichspannung ausreicht und vorzugsweise auch keine möglicherweise übliche Schwankung der eingehenden Gleichspannung vorliegt. In einer bevorzugten Ausführungsform hängt die Aktivierung des vorbestimmten Betriebsmodus zusätzlich von der Zeitdauer ab, während der die eingehende Gleichspannung den zweiten Schwellenwert unterschreitet.

Die Abtrenneinrichtung verhindert ein Entladen des Kondensators über die eingehende Gleichspannung. Dies ermöglicht es, die eingehende Gleichspannung auch bei geschlossenem Schalter direkt und unverfälscht zu überwachen und einen eventuellen Abfall der eingehenden Gleichspannung schnell und eindeutig zu detektieren.

Vorzugsweise stellt der vorbestimmte Betriebsmodus einen Abschaltmodus dar. In einer ersten Ausgestaltung des Abschaltmodus bereitet die Recheneinheit eine nachfolgende vollständige Abschaltung der Recheneinheit vor. Dies ist insbesondere dann sinnvoll, wenn vor dem vollständigen Abschalten der Recheneinheit noch bestimmte Schritte ausgeführt werden sollen oder müssen. In dem Abschaltmodus werden beispielsweise Daten in einem nicht-flüchtigen Speichers gesichert, laufende Prozesse beendet, was dann in geordneter Art und Weise geschehen kann, und/oder Prozesse, die das Abschalten vorbereiten, ausgeführt. Nach Abschluss des Abschaltmodus kann die Recheneinheit dann entsprechend ohne Datenverlust vollständig abgeschaltet, das heißt in den Reset geschaltet werden.

In einer zweite Ausgestaltung des Abschaltmodus werden Prozesse, deren unkontrolliertes Beenden einen Datenverlust zur Folgen haben könnte, kontrolliert beendet und nur solche Prozesse fortgeführt, die jederzeit ohne Datenverlust beendet werden können. In diesem Zustand kann die Recheneinheit dann solange betrieben werden, bis die notwendige Versorgungsspannung nicht mehr ausreicht. Diese zweite Ausgestaltung des Abschaltmodus stellt einen Sicherheitsmodus dar, in dem die Recheneinheit jederzeit ohne Datenverlust abgeschaltet werden kann.

Alternativ kann der vorbestimmte Betriebsmodus auch einen Energiesparmodus darstellen, in dem die Recheneinheit die Leistungsaufnahme gegenüber dem normalen Betriebsmodus reduziert, beispielsweise durch Abschalten von Prozessen, die nicht unbedingt benötigt werden. Durch die Aktivierung des Energiesparmodus kann die Recheneinheit länger mit der in dem Kondensator gespeicherte elektrischen Energie betrieben werden und somit die Nachlaufzeit der als USV verwendeten erfindungsgemäßen Vorrichtung erhöht werden. Der Energiesparmodus ist vorzugsweise derart ausgestaltet, dass die Recheneinheit jederzeit ohne Datenverlust abgeschaltet werden kann. Alternativ kann die Recheneinheit eingerichtet sein, in dem Energiesparmodus den Ladungszustand des Kondensators zu bestimmen und bei Absinken des Ladungszustands des Kondensators unter einen weiteren Schwellenwert den Abschaltmodus zu aktivieren.

Ist die Recheneinheit vollständig abgeschaltet, so gibt sie keine Signale aus. Handelt es sich bei dem Stützsignal um ein Impulssignal, so stellt die Abgabe des Impulssignals, das den Schalter öffnet, das vollständige Abschalten der Recheneinheit dar. Handelt es sich dagegen bei dem Stützsignal um ein permanentes Signal, bei dessen Anliegen der Schalter geschlossen und anderenfalls offen ist, so wird das Stützen der ausgehenden Gleichspannung automatisch und sicher beendet, wenn die Recheneinheit vollständig abschaltet. Hierdurch wird ein unnötiges Entladen des Kondensators (z.B. über die Recheneinheit) vermieden, wodurch ein späterer Ladevorgang des Kondensators wegen der darauf noch vorhandenen Ladung verkürzt werden kann.

Zudem würde ohne ein solches Öffnen des Schalters beim vollständigen Abschalten der Recheinheit wegen des in Folge des vollständigen Abschaltens unterbrochenen Stromflusses zur Versorgung der Recheneinheit die an der Recheneinheit zur Verfügung stehende Versorgungsspannung wieder ansteigen, was gegebenenfalls zu einem ungewollten, erneuten Starten der Recheneinheit und anschließendem Wiederabschalten führt. Solche ungewollten "Schwingungen" können gegebenenfalls auch mehrfach auftreten. Sie werden durch das Öffnen des Schalters beim vollständigen Abschalten der Recheneinheit sicher verhindert.

In einer besonders bevorzugten Ausgestaltung der Schaltvorrichtung, kann die Recheneinrichtung in dem vorbestimmten Betriebsmodus mit einer verringerten Versorgungsspannung betrieben werden.

In einer bevorzugten Ausführungsform umfasst die Schalteinrichtung einen erfindungsgemäßen Ladeschaltkreis zum Laden des Kondensators, wobei der Eingang des Kondensators mit dem Ladeschaltkreis verbunden ist, die Recheneinheit das Schaltsignal an den Ladeschaltkreis abgibt und der Ladeschaltkreis vorzugsweise von der eingehenden Gleichspannung oder der ausgehenden Gleichspannung versorgt wird.

Durch das Angeben des Schaltsignals kann die Recheneinheit die Belastung der Gleichspannungsquelle bestimmen. Dies ist insbesondere dann von Vorteil, wenn die Recheneinheit über Informationen hinsichtlich der maximalen Belastbarkeit der Gleichspannungsquelle verfügt. Vorzugsweise erzeugt die Recheneinheit das abzugebende Schaltsignal.

Ein erfindungsgemäßes USB-Gerät umfasst eine erfindungsgemäße Schalteinrichtung und mit erfindungsgemäßem Ladeschaltkreis.

Die Recheneinheit ist dabei eingerichtet, das Schaltsignal nach Abschluss der Enumeration abzugeben.

Als USB-Gerät wird in diesem Zusammenhang ein Gerät bezeichnet, das über eine USB-Schnittstelle an einen USB-Host (z.B. USB-Controller oder USB-Hub) angeschlossen wird, um mit diesem Daten auszutauschen und von diesem mit elektrischer Energie versorgt zu werden. Derartige USB-Geräte sind auch als USB-Client oder USB-Slave bekannt. In dem erfindungsgemäßen USB-Gerät ist die eingehende Gleichspannung der erfindungsgemäßen Vorrichtung der Schalteinrichtung die von einem USB-Host bezogene Versorgungsspannung. Vorzugsweise findet der Datenaustausch zwischen dem USB-Host und der Recheneinheit der erfindungsgemäßen Schalteinheit des erfindungsgemäßen USB-Geräts statt.

Unmittelbar nach dem Verbinden eines derartigen USB-Geräts mit einem USB-Host, wird die Enumeration gemäß dem USB-Standard durchgeführt. Bei der Enumeration macht sich das USB-Gerät bei dem USB-Host bekannt, es werden Konfigurationsdaten ausgetauscht und das USB-Gerät und gegebenenfalls der USB-Host konfiguriert. Gemäß USB-Standard darf das USB-Gerät bis zum Abschluss der Enumeration den USB-Host, der gemäß Standard eine Gleichspannung von 5 V liefert, maximal mit 100 mA belasten. Nach Abschluss der Enumeration steht prinzipiell ein höherer Strom von bis zu 500 mA zur Verfügung.

Vorzugsweise führt die Recheneinheit des erfindungsgemäßen USB-Geräts den Enumerationsprozess durch. Der Recheneinheit ist somit bekannt, wenn die Enumeration abgeschlossen ist und wann somit der USB-Host mit einem höheren Strom belastet werden kann. Erfindungsgemäß gibt daher die Recheneinheit das Schaltsignal an den Ladeschaltkreis nach Abschluss der Enumeration ab und ist dazu entsprechend eingerichtet. Alternativ kann die Recheneinheit das Schaltsignal auch nach Ablauf eines vorbestimmten Zeitintervalls nach dem Herstellen der Verbindung mit dem USB-Host abgeben, wobei das Zeitintervall derart bemessen wird, dass davon auszugehen ist, dass die Enumeration innerhalb des Zeitintervalls abgeschlossen ist.

Bei dem erfindungsgemäßen USB-Gerät handelt es sich vorzugsweise um eine CCU (Cash Control Unit). Dies ist eine Vorrichtung, die mit einer Registrierkasse verbunden wird, um Transaktionsdaten für Steuerbehörden etc. sicher zu erfassen und zu speichern. Diese benötigt vor dem Abschalten gegebenenfalls eine gewisse Zeit, um die Transaktionsdaten sicher zu speichern, einen Datenverlust zu vermeiden und somit die erforderliche Datensicherheit zu gewährleisten. Nach einem unerwarteten Ausfall der eingehenden Gleichspannung wird in der CCU, die als erfindungsgemäßes USB-Gerät aufgebaut ist, eine entsprechende Nachlaufzeit durch die erfindungsgemäße Vorrichtung zum Erzeugen einer gestützten, ausgehenden Gleichspannung sichergestellt. Zudem ist eine solche CCU durch das schnelle Laden des Kondensators nach kurzer Zeit betriebsbereit.

Anstelle einer USB-Schnittstelle kann alternativ auch eine anderweitige serielle Schnittstelle, beispielsweise gemäß RS232, vorgesehen sein.

Prinzipiell ist es auch denkbar, ein USB-Gerät nur mit der erfindungsgemäßen Vorrichtung zum Erzeugen einer gestützten, ausgehenden Gleichspannung auszustatten ohne einen erfindungsgemäßen Ladeschaltkreis vorzusehen.

Ausführungsbeispiele und Vorteile der Erfindung werden nachfolgend beispielhaft anhand der begleitenden Figuren erläutert. Die Beispiele stellen bevorzugte Ausführungsformen dar, die die Erfindung in keiner Weise beschränken. Die gezeigten Figuren sind schematische Darstellungen, die die realen Proportionen nicht widerspiegeln, sondern einer verbesserten Anschaulichkeit der verschiedenen Ausführungsbeispiele dienen.

Im Einzelnen zeigen die Figuren:
- Figur 1:: eine Schalteinrichtung mit einer Recheneinheit und einer Vorrichtung zum Erzeugen einer gestützten, ausgehenden Gleichspannung zur Versorgung der Recheneinheit,
- Figuren 2A und 2B:: den zeitlichen Verlauf des durch den Kondensator fließenden Stroms und der am Kondensator anliegenden Spannung, und
- Figur 3:: einen bekannten Schaltkreis zum Stützen einer Gleichspannung.

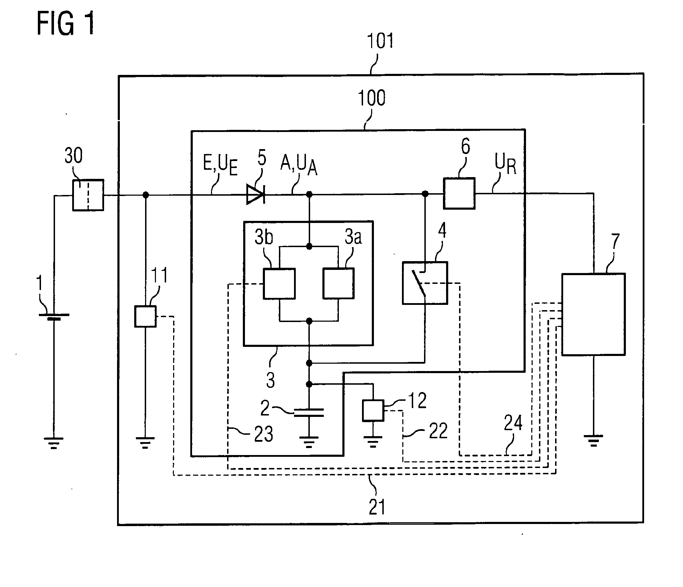

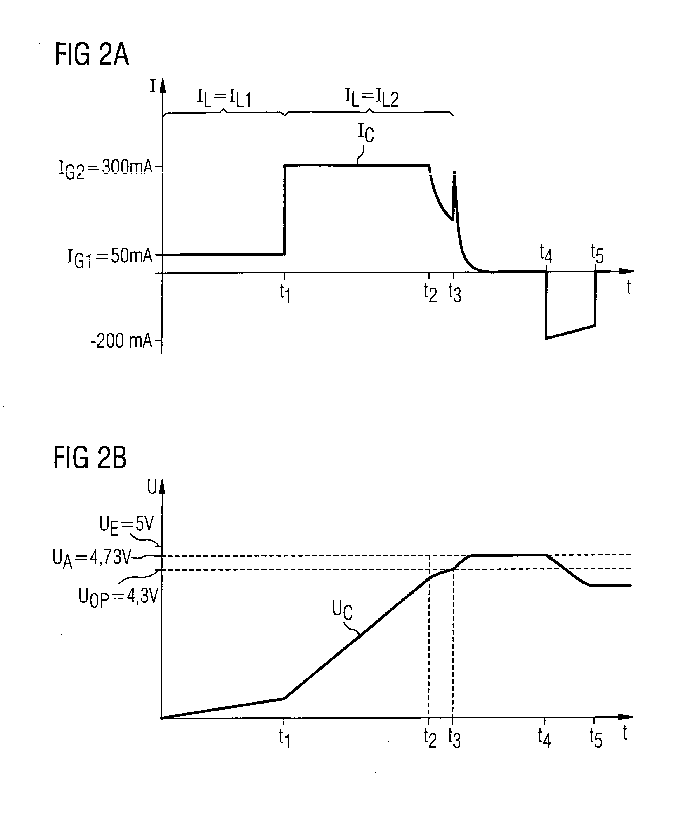

In Figur 1 ist ein Ausführungsbeispiel einer Schalteinrichtung 101 dargestellt. Sie umfasst eine Vorrichtung 100 zum Erzeugen einer gestützten, ausgehenden Gleichspannung U_{A} aus einer eingehenden Gleichspannung U_{E} einer Gleichspannungsquelle 1. Die ausgehende Gleichspannung U_{A} wird durch Zuschalten eines Kondensators 2 gestützt. Die Vorrichtung 100 umfasst weiterhin eine Recheneinheit 7, die mit der ausgehenden Gleichspannung U_{A} versorgt wird. Der Betrieb der Schalteinrichtung 101 wird nachfolgend im Zusammenhang mit den Figuren 2A und 2B erläutert.

Im vorliegenden Beispiel ist die Schalteinrichtung 101 Bestandteil eines USB-Geräts. Dementsprechend ist die Gleichspannungsquelle 1 Bestandteil eines USB-Hosts und die eingehende Gleichspannung U_{E} wird von der Gleichspannungsquelle 1 über die USB-Steckverbindung 30 bezogen. Die Leitungen zum Datenaustausch gemäß USB-Standard sind in Figur 1 nicht dargestellt.

Die Diode 5 der Vorrichtung 100 bildet eine Abtrenneinrichtung und verhindert einen Stromfluss von der Ausgangsleitung A, an der eine ausgehende Gleichspannung U_{A} anliegt, zu der Eingangsleitung E, an der eine eingehende Gleichspannung U_{E} anliegt, wenn die eingehende Gleichspannung U_{E} kleiner ist als die ausgehende Gleichspannung U_{A}. Die Diode 5 ermöglicht jedoch einen Stromfluss von der Eingangsleitung E zu der Ausgangsleitung A, wenn die eingehende Gleichspannung U_{E} um einen von der verwendeten Diode 5 abhängigen Wert größer ist, als die ausgehende Gleichspannung U_{A}. Die eingehende Gleichspannung U_{E} muss um einen bestimmten Wert größer sein als die ausgehende Gleichspannung U_{A}, da an der Diode 5 eine gewisse Spannung abfällt.

Vorliegend handelt es sich bei der Diode 5 um eine Schottky-Diode (Metall-Halbleiterdiode), an der bei Stromfluss eine Spannung (die so genannte Flussspannung) von ca. 0,27 V abfällt. Dieser Wert ändert sich leicht in Abhängigkeit von dem Stromfluss durch die Diode 5. Alternativ kann als Diode 5 auch eine Halbleiterdiode, wie eine Siliziumdiode oder eine Germaniumdiode, verwendet werden. Derartige Halbleiterdioden oder Metall-Halbleiterdioden werden beispielsweise auch zur Gleichrichtung von Strömen verwendet.

Die ausgehende Gleichspannung U_{A} dient zur Versorgung der Recheneinheit 7 der Schalteinrichtung 101. Bei der Recheneinheit 7 handelt es sich beispielsweise um einen Mikrocontroller oder Mikroprozessor. Prinzipiell kann ein beliebiger Stromverbraucher mit einer derartigen Vorrichtung 100 zum Erzeugen einer gestützten, ausgehenden Gleichspannung U_{A} versorgt werden.

Im gezeigten Ausführungsbeispiel beträgt die eingehende Gleichspannung U_{E} 5 V, die ausgehende Gleichspannung U_{A} dementsprechend 4,73 V, während zur Versorgung der Recheneinheit 7 nur 3,3 V benötigt werden. Daher wird die Recheneinheit 7 nicht direkt mit der ausgehenden Gleichspannung U_{A} versorgt. Vielmehr ist der Recheneinheit 7 eine Spannungsreduziereinrichtung 6 vorgeschaltet, die die ausgehende Gleichspannung U_{A} auf eine niedrigere Gleichspannung U_{R} von 3,3 V reduziert. Somit kann die notwendige Versorgungsspannung U_{R} bereitgestellt werden, solange die ausgehende Gleichspannung U_{A}, die am Eingang der Spannungsreduziereinrichtung 6 anliegt, größer als U_{R} ist. Mit anderen Worten kann die der Spannungsdifferenz zwischen der ausgehenden Gleichspannung U_{A} und der niedrigeren Gleichspannung U_{R} entsprechende Energiemenge dem Kondensator 2 entnommen werden und steht somit als entnehmbare Energie zur Realisierung eines Nachlaufs, das heißt einer unterbrechungsfreien Stromversorgung, zur Verfügung. Im Ergebnis kann die niedrigere Gleichspannung U_{R} bei Vorhandensein einer Spannungsdifferenz zur ausgehenden Gleichspannung U_{A} gut stabilisiert werden.

Der Schalter 4 ist über die Signalleitung 24 mit der Recheneinheit 7 verbunden. Über die Signalleitung 24 gibt die Recheneinheit 7 das Stützsignal aus und der Schalter 4 empfängt das Stützsignal über die Signalleitung 24. Bei Vorliegen des Stützsignals schließt der Schalter 4 den Eingang des Kondensators 2 mit der Ausgangsleitung A, an der die ausgehende Gleichspannung U_{A} anliegt, kurz. Solange der Eingang des Kondensators 2 mit der ausgehenden Gleichspannung U_{A} derart verbunden ist, das heißt solange der Schalter 4 geschlossen ist, wird die ausgehenden Gleichspannung U_{A} durch den Kondensator 2 gestützt und steht als gestützte, ausgehende Gleichspannung U_{A} zur Verfügung. Bei Vorhandensein des Stützsignals ist der Kondensator 2 dementsprechend an die ausgehende Gleichspannung U_{A} angeschlossen, und die Vorrichtung 100 arbeitet als unterbrechungsfreie Stromversorgung (USV). Die Schalter 4 ist im vorliegenden Ausführungsbeispiel ein elektrisch betätigbarer Schalter (z.B. Relais), der die beiden Eingänge des Schalters miteinander kurzschließt. Alternativ kann auch ein anderweitiger Schalter, wie beispielsweise ein Transistor, insbesondere FET-Transistor, vorgesehen sein.

Bei Inbetriebnahme der Schalteinrichtung 101, das heißt bei Anschalten der eingehenden Gleichspannung U_{E}, ist der Kondensator 2 zunächst ungeladen oder zumindest unzureichend geladen, um die ausgehende Gleichspannung U_{A} zu stützen, und der Schalter 4 ist daher offen. Ein Verbinden des Eingangs des Kondensators 2 mit der ausgehenden Gleichspannung U_{A} hätte daher einen hohen Stromfluss durch den Kondensator 2 und eine entsprechend hohe Belastung und gegebenenfalls eine Überlastung der Gleichspannungsquelle 1 zur Folge. Der Kondensator 2 wird daher zunächst mit dem Ladeschaltkreis 3 geladen. Der Ladeschaltkreis 3 erzeugt in Abhängigkeit von einem Schaltsignal, das er über die Signalleitung 23 von der Recheneinheit 7 empfängt, einen ersten Ladestrom I_{L1} oder einen zweiten Ladestrom I_{L2}.

In dem dargestellten Ausführungsbeispiel umfasst der Ladeschaltkreis 3 einen ersten Ladeteilschaltkreis 3a und einen zweiten Ladeteilschaltkreis 3b, der zu dem ersten Ladeteilschaltkreis 3a parallel geschaltet ist. Der erste Ladeteilschaltkreis 3a gibt den ersten Ladestrom I_{L1} ab, und der zweite Ladeteilschaltkreis 3b gibt einen weiteren Ladestrom ab, der in Summe mit dem ersten Ladestrom I_{L1} den zweiten Ladestrom I_{L2} ergibt. Alternativ wäre auch eine Ausführungsvariante denkbar, in der der erste Ladeteilschaltkreis 3a den ersten Ladestrom I_{L1} und der zweite Ladeteilschaltkreis 3b den zweiten Ladestrom I_{L2} abgibt und beide Ladeteilschaltkreise 3a und 3b in Abhängigkeit des Schaltsignals alternativ arbeiten. Der Ladeschaltkreis 3 wird im vorliegenden Ausführungsbeispiel über die Ausgangsleitung A mit der ausgehenden Gleichspannung U_{A} versorgt. Alternativ kann der Ladeschaltkreis 3 auch über die Eingangsleitung E mit der eingehenden Gleichspannung U_{E} versorgt werden.

Bei den Ladeteilschaltkreisen 3a, 3b handelt es sich um Konstantstromquellen, das heißt die Ladeteilschaltkreise 3a, 3b sind derart ausgestaltet, dass der Wert des ersten Ladestroms I_{L1} und der Wert des zweiten Ladestroms I_{L2} auf jeweils einem ersten Ladestromwert I_{G1} und einen zweiten Ladestromwert I_{G2} konstant gehalten (geregelt) werden. Alternativ kann der Ladeschaltkreis 3 auch derart ausgestaltet werden, dass der Wert des ersten Ladestroms I_{L1} den ersten Ladestromwert I_{G1} nicht übersteigt, und der Wert des zweiten Ladestroms I_{L2} den zweiten Ladestromwert I_{G2} nicht übersteigt. Der ersten Ladestromwert I_{G1} ist dabei größer als der zweite Ladestromwert I_{G2}.

Der Kondensator 2 wird mit den üblicherweise voneinander verschiedenen Ladeströmen I_{L1}, I_{L2} geladen, um den Ladestrom I_{L} an eine sich verändernde zulässige Maximalbelastung der Gleichspannungsquelle 1 des USB-Hosts anzupassen. Direkt nach dem Verbinden eines USB-Geräts mit einem USB-Host, vor Abschluss der Enumeration gemäß USB-Standard, darf das USB-Gerät gemäß USB-Standard zunächst lediglich einen Strom von maximal 100 mA bei 5V Spannung entnehmen. Nach erfolgter Enumeration, bei der unter anderem eine Identifizierung und Konfiguration des USB-Geräts vorgenommen wird, darf ein höherer Strom von 500 mA entnommen werden, das heißt die zulässige Belastung der Gleichspannungsquelle 1 liegt dann bei 500 mA. Die Recheneinheit 7 verbraucht in dem vorliegenden Ausführungsbeispiel vor der Enumeration einen Strom von bis zu 50 mA und nach der Enumeration einen Strom von bis zu 200 mA. Dementsprechend darf der Kondensator 2 vor der Enumeration mit einem ersten Ladestrom I_{L1} von maximal 50 mA geladen werden, damit der resultierende Gesamtstrom It die Gleichspannungsquelle 1 nicht überlastet. Entsprechend beträgt der erste Ladestromwert I_{G1} 50 mA. Nach Enumeration darf der Kondensator 2 mit einem zweiten Ladestrom I_{L2} von maximal 300 mA geladen werden. Entsprechend beträgt der zweite Ladestromwert I_{G2} 300 mA.

Zu Beginn des Ladevorgangs zwischen den Zeitpunkten to und t₁ wird der Kondensator 2 mit dem ersten konstanten Ladestrom I_{L1} = I_{G1} = 50 mA geladen (siehe Figur 2A). Der Gesamtstrom It überschreitet dementsprechend einen Wert von 100 mA nicht. Während dessen führt die Recheneinheit 7 die Enumeration aus bzw. ist an dem Enumerationsprozess beteiligt und hat daher Kenntnis von dem Zeitpunkt t₁, zu dem die Enumeration des USB-Geräts abgeschlossen ist. Nach Abschluss der Enumeration bei t₁ gibt die Recheneinheit 7 das Schaltsignal an den Ladeschaltkreis 3 ab, wobei die Recheneinheit das Schaltsignal erzeugt. Anschließend wird der Kondensator 2 von dem Ladeschaltkreis 3 mit dem zweiten konstanten Ladestrom I_{L2} = I_{G2} = 300 mA geladen (siehe Figur 2A). Der Gesamtstrom It überschreitet dementsprechend einen Wert von 500 mA nicht. Wie der Figur 2B zu entnehmen ist, steigt die an dem Kondensator 2 anliegende Spannung Uc nach Abgabe des Schaltsignals an den Ladeschaltkreis 3 deutlich schneller. Alternativ kann die Recheneinheit 7 das Schaltsignal auch nachdem ein vordefiniertes Zeitintervall nach dem Verbinden des USB-Geräts mit dem USB-Host verstrichen ist, erzeugen, wobei das Zeitintervall derart bemessen wird, dass die Enumeration innerhalb des Zeitintervalls sicher abgeschlossen ist. In einer nicht dargestellten Ausführung detektiert die Recheneinheit 7, ob das USB-Gerät über die USB-Schnittstelle an einen USB-Host oder lediglich an eine Spannungsquelle, beispielsweise ein Netzteil, ohne USB-Funktionalität angeschlossen wird. Im letzterem Fall wird das Schaltsignal dann unmittelbar nach dem Verbinden ausgegeben.

Wie der Figur 2A zu entnehmen ist, bricht bei einem Zeitpunkt t₂ der Ladestrom I_{L} ein. Dies liegt daran, dass sich die an dem Kondensator 2 anliegende Spannung Uc der ausgehenden Gleichspannung U_{A}, mit der in dem vorliegenden Ausführungsbeispiel der Ladeschaltkreis 3 versorgt wird, so weit angenähert hat, dass der Ladestrom I_{L2} von 300 mA nicht mehr aufrecht erhalten werden kann. Die an dem Kondensator 2 anliegende Spannung Uc steigt dementsprechend ab dem Zeitpunkt t₂ langsamer an.

Beim Zeitpunkt t₃ liegt am Kondensator 2 eine Spannung Uc von 4,3V an. Hier wird der Schalter 4 geschlossen und somit der Eingang des Kondensators 2 mit der Ausgangsleitung kurzgeschlossen. Die Recheneinheit 7 überwacht den Ladungszustand des Kondensators 2 und ist hierzu über die Signalleitung 22 mit einer ersten Spannungsmessvorrichtung 12 verbunden, die die an dem Kondensator 2 anliegende Spannung misst. Die Recheneinheit 7 bestimmt mit dieser Information den Ladungszustand des Kondensators 2, erzeugt das Stützsignal und gibt es über die Signalleitung 24 an den Schalter 4 ab, sobald der Ladungszustand des Kondensators 2 einen vorgegebenen ersten Schwellenwert U_{OP}, der im vorliegenden Ausführungsbeispiel durch eine Spannung von 4,3 V definiert ist, überschreitet. Die Kondensatorspannung Uc, bei der der Schalter 4 geschlossen wird und somit das Laden des Kondensators 2 beendet wird, wird derart gewählt dass der Strompuls, der sich aus der beim Schließen des Schalters 4 noch vorhandenen Spannungsdifferenz ergibt, die Gleichspannungsquelle 1 nicht überlastet. Der Schalter 4 wird geschlossen, indem die Recheneinheit 7 über die Signalleitung 24 ein Stützsignal abgibt. Das Stützsignal ist im vorliegenden Ausführungsbeispiel ein permanentes Signal. Es kann alternativ jedoch auch aus Impulsen bestehen, die den Schalter 4 schließen und öffnen.

In dem vorlegenden Beispiel steigt die am Kondensator 2 anliegende Spannung Uc zum Zeitpunkt t₃ über den ersten Schwellenwert U_{OP}, und die Recheneinheit 7 gibt ab diesem Zeitpunkt das Stützsignal aus. Wie in Figur 2A zu erkennen ist, fällt hierdurch der durch den Ladeschaltkreis 3 generierte Ladestrom I_{L} auf Null ab. Im Gegensatz dazu steigt der gesamte der Gleichspannungsquelle 1 entnommene Strom It kurzzeitig etwas an, da die noch fehlende Ladung des Kondensators 2 nun über den Schalter 4 geladen wird, der einen geringeren elektrischen Widerstand hat als der Ladeschaltkreis 3. Dieser Anstieg des Gesamtstroms It ist jedoch nicht derart stark, dass die Gleichspannungsquelle 1 überlastet wird, da der Schwellenwert U_{OP} entsprechend gewählt wurde.

Gemäß einer alternativen Ausführungsform wird der Zeitpunkt t₂, zu dem der zweite Ladestrom I_{L2} beginnt abzunehmen oder sein Maximum erreicht, als Kriterium zur Bestimmung des Zeitpunkts t₃ herangezogen, zu dem auf dem Kondensator 2 eine ausreichenden Ladung vorhanden ist, die es gestattet den Schalter 4 ohne Überlastungsgefahr für die Gleichspannungsquelle 1 zu schließen. Dies kann dadurch geschehen, dass das Stützsignal nach einem weiteren vorbestimmten Zeitintervall Δt nach dem Zeitpunkt t₂ (t₃=t₂+Δt) ausgegeben wird oder indem das Stützsignal unmittelbar zum Zeitpunkt t₂ ausgegeben wird (t₃=t₂). Auf die erste Spannungsmessvorrichtung 12 kann in dieser alternativen Ausführungsform verzichtet werden.

Mit der dargestellten Ladeschaltung lässt sich für USB-Geräte eine Ladezeit des Kondensators von weniger als 60 Sekunden bei einer Kondensatorkapazität von 2 F (Farad) erzielen.

Die Recheneinheit 7 überwacht zudem die eingehende Gleichspannung U_{E} mittels der zweiten Spannungsmessvorrichtung 11, die über die Signalleitung 21 mit der Recheneinheit 7 verbunden ist, und aktiviert bei Absinken der eingehenden Gleichspannung U_{E} unter einen zweiten Schwellenwert einen vorbestimmten Betriebsmodus.

In dem dargestellten Ausführungsbeispiel fällt zu dem Zeitpunkt t₄ die eingehende Gleichspannung ab und steht zur Versorgung der Recheneinheit 7 nicht mehr zur Verfügung. Dementsprechend wird ab diesem Zeitpunkt t₄ die Recheneinheit durch den Kondensator 2 versorgt, was in Fig. 2A an einem Stromfluss Ic durch den Kondensator 2, der ein umgekehrtes Vorzeichen im Vergleich zu dem Ladestrom I_{L} besitzt, und durch ein stetiges Absinken der an dem Kondensator 2 anliegenden Spannung Uc zu erkennen ist. Zudem wird zu dem Zeitpunkt t₄ der vorbestimmte Betriebsmodus der Recheneinheit 7 aktiviert. In dem dargestellten Ausführungsbeispiel ist der vorbestimmte Betriebsmodus ein Abschaltmodus, in dem ein vollständiges Abschalten der Recheneinheit 7 vorbereitet wird. Sind die Vorbereitungen zum vollständigen Abschalten der Recheneinheit 7 abgeschlossen, so schaltet sich die Recheneinheit 7 ab (Zeitpunkt t₅). Im vorliegenden Ausführungsbeispiel ist die Kapazität des Kondensators 2 derart bemessen, dass das Vorbereiten des Abschaltens der Recheneinheit 7 abgeschlossen ist, bevor die an dem Kondensator 2 anliegende Spannung unter die zur Versorgung der Recheneinheit 7 erforderlichen 3,3 V abfällt.

Die abgeschaltete Recheneinheit 7 gibt keine Signale, wie das permanente Stützsignal, ab. Daher wird der Schalter 4 bei abgeschalteter Recheneinheit 7 automatisch geöffnet. Damit wird zum einen ein unnötiges Entladen des Kondensators 2 und zum anderen ein ungewollter Neustart der Recheneinheit 7 verhindert. Zum Zeitpunkt t₅ fällt der durch den Kondensator 2 fließende Strom Ic entsprechend auf Null ab und die an dem Kondensator 2 anliegende Spannung Uc bleibt konstant, da der Kondensator 2 nicht weiter entladen wird. Falls das Stützsignal alternativ in Form eines Impulssignals ausgegeben wird, erfordert das Öffnen des Schalters 4 zum Zeitpunkt t₅ die Ausgabe eines entsprechenden Impulssignals durch die Recheneinheit 7. Mit Abgabe dieses Impulssignals zum Öffnen des Schalters 4 wird die Versorgung der Recheneinheit 7 durch den Kondensator 2 beendet.

Alternativ bevorzugt stellt der vorbestimmte Betriebsmodus einen Energiesparmodus dar, in dem die Recheneinheit 7 einen verringerten Stromverbrauch aufweist. In einer weiteren alternativen Ausgestaltung ist die Recheneinheit eingerichtet, in dem vorbestimmten Betriebsmodus mit einer geringeren Versorgungsspannung betrieben zu werden, beispielsweise mit 1,5 V. Vor dem vollständigen Abschalten der Recheneinheit 7 werden vorzugsweise Daten mittels eines nicht-flüchtigen Speichers gesichert und/oder sonstige Prozesse, die das Abschalten vorbereiten, ausgeführt und/oder Prozesse, die vor dem Abschalten abgeschlossen und/oder beendet werden müssen, abgeschlossen und/oder beendet. Alternativ dazu kann die Recheneinheit 7 auch eingerichtet sein, in dem Energiesparmodus den Ladungszustand des Kondensators 2 zu bestimmen und bei Absinken des Ladungszustands des Kondensators 2 unter einen dritten Schwellenwert den Abschaltmodus zu aktivieren.

Bei dem USB Gerät kann es sich insbesondere um eine CCU (Cash Control Unit) handeln.

Der in Fig. 3 dargestellte Schaltkreis 210 zum Stützen einer Gleichspannung mittels eines Kondensators 202 gemäß dem Stand der Technik wurde bereits in der Einleitung beschrieben.

## Patentansprüche

1. Ladeschaltkreis (3) zum Laden eines Kondensators (2), **dadurch gekennzeichnet, dass** der Ladeschaltkreis (3) eingerichtet ist, in Abhängigkeit eines Schaltsignals einen ersten Ladestrom (I_{L1}) oder einen zweiten Ladestrom (I_{L2}) zum Laden des Kondensators (2) zu erzeugen.

2. Ladeschaltkreis (3) nach Anspruch 1, **dadurch gekennzeichnet, dass** der Ladeschaltkreis (3) derart eingerichtet ist, dass der Wert des ersten Ladestroms (I_{L1}) einen ersten vorbestimmten Ladestromwert (I_{G1}) nicht übersteigt, und der Wert des zweiten Ladestroms (I_{L2}) einen zweiten vorbestimmten Ladestromwert (I_{G2}) nicht übersteigt, wobei der zweite vorbestimmte Ladestromwert (I_{G2}) größer als der erste vorbestimmte Ladestromwert (I_{G1}) ist.

3. Ladeschaltkreis (3) nach Anspruch 2, **dadurch gekennzeichnet, dass** der Ladeschaltkreis (3) derart eingerichtet ist, dass der Wert des ersten Ladestroms (I_{L1}) konstant und gleich dem ersten vorbestimmten Ladestromwert (I_{G1}) ist und/oder der Wert des zweiten Ladestroms (I_{L2}) konstant und gleich dem zweiten vorbestimmten Ladestromwert (I_{G2}) ist.

4. Ladeschaltkreis (3) nach einem der vorhergehenden Ansprüche, **dadurch gekennzeichnet, dass** der Ladeschaltkreis (3) einen ersten (3a) und einen zweiten (3b) Ladeteilschaltkreis umfasst, wobei der erste Ladeteilschaltkreis (3a) den ersten Ladestrom (I_{L1}) abgibt, und der zweite Ladeteilschaltkreis (3b) einen weiteren Ladestrom abgibt, der den zweiten Ladestrom (I_{L2}) bildet oder in Summe mit dem ersten Ladestrom (I_{L1}) den zweiten Ladestrom (I_{L2}) ergibt.

5. Vorrichtung (100) zum Erzeugen einer gestützten, ausgehenden Gleichspannung (U_{A}) aus einer eingehenden Gleichspannung (U_{E}), umfassend:
- eine Abtrenneinrichtung (5), die die ausgehende Gleichspannung (U_{A}) von der eingehenden Gleichspannung (U_{E}) abtrennt, wenn der Wert der eingehenden Gleichspannung (U_{E}) kleiner als der Wert der ausgehenden Gleichspannung (U_{A}) ist,
- einen Kondensator (2), vorzugsweise einen Doppelschichtkondensator, und
- einen Schalter (4), der bei daran angelegtem Stützsignal einen Eingang des Kondensators (2) mit der ausgehende Gleichspannung (U_{A}) verbindet, vorzugsweise kurzschließt, wodurch die ausgehende Gleichspannung (U_{A}) gestützt wird, sowie vorzugsweise weiter umfassend:
- eine Spannungsreduziereinrichtung (6), die die ausgehende Gleichspannung (U_{A}) reduziert, und/oder
- einen Ladeschaltkreis (3) nach einem der Ansprüche 1 bis 4 zum Laden des Kondensators (2).

6. Schalteinrichtung (101), umfassend:
- eine Recheneinheit (7), und
- eine Vorrichtung (100) nach Anspruch 5 zum Erzeugen einer gestützten, ausgehenden Gleichspannung (U_{A}),
wobei die ausgehenden Gleichspannung (U_{A}) eine Versorgungsspannung der Recheneinheit (7) bildet.

7. Schalteinrichtung (101) nach Anspruch 6, **dadurch gekennzeichnet, dass** die Recheneinheit (7) eingerichtet ist, einen Ladungszustand des Kondensators (2), vorzugsweise mit Hilfe einer ersten Spannungsmessvorrichtung (12), zu überwachen und das Stützsignal an den Schalter (4) abzugeben, wenn der Ladungszustand des Kondensators (2) einen vorbestimmten ersten Schwellenwert (U_{OP}) überschreitet.

8. Schalteinrichtung (101) nach Anspruch 6 oder 7, **dadurch gekennzeichnet, dass** die Recheneinheit (7) eingerichtet ist, die eingehende Gleichspannung(U_{E}), vorzugsweise mit Hilfe einer zweiten Spannungsmessvorrichtung (11), zu überwachen und einen vorbestimmten Betriebsmodus zu aktivieren, wenn die eingehende Gleichspannung (U_{E}) einen vorbestimmten zweiten Schwellenwert unterschreitet, wobei vorzugsweise der vorbestimmte Betriebsmodus einen Abschaltmodus darstellt und/oder die Recheneinheit (7) in dem vorbestimmten Betriebsmodus mit einer verringerten Versorgungsspannung betrieben wird.

9. Schalteinrichtung (101) nach einem der Ansprüche 6 bis 8, **dadurch gekennzeichnet, dass** die Vorrichtung (100) zum Erzeugen einer gestützten Gleichspannung einen Ladeschaltkreis (3) nach einem der Ansprüche 1 bis 4 zum Laden des Kondensators (2) umfasst, wobei der Ladeschaltkreis (3) mit dem Eingang des Kondensators (2) verbunden ist, die Recheneinheit (7) eingerichtet ist, das Schaltsignal an den Ladeschaltkreis (3) abzugeben, und der Ladeschaltkreis (3) vorzugsweise von der eingehenden Gleichspannung (U_{E}) oder der ausgehenden Gleichspannung (U_{A}) versorgt wird.

10. USB-Gerät umfassend eine Schalteinrichtung (101) nach Anspruch 9, **dadurch gekennzeichnet, dass** die Recheneinheit (7) eingerichtet ist, das Schaltsignal nach Abschluss der Enumeration abzugeben.

11. Verfahren zum Betrieb eines Ladeschaltkreises (3) nach einem der Ansprüche 1 bis 4, **gekennzeichnet durch** die Schritte:
- Abgeben des ersten Ladestroms (I_{L1}) zum Laden des Kondensators (2),
- Abgeben des zweiten Ladestroms (I_{L2}) zum Laden des Kondensators (2) bei Erhalt des Schaltsignals.

12. Verfahren zum Betrieb einer Vorrichtung (100) nach Anspruch 5, umfassend den Verfahrensschritt:
- Anlegen des Stützsignals an den Schalter (4), wenn der Ladungszustands des Kondensators (2) einen vorbestimmten ersten Schwellenwert (U_{OP}) überschritten hat.

13. Verfahren zum Betrieb einer Schalteinrichtung nach einem der Ansprüche 6 bis 9, umfassend ein Verfahren nach Anspruch 12, **dadurch gekennzeichnet, dass** die Recheneinheit (7) einen Ladungszustand des Kondensators (2) zumindest während des Ladens des Kondensators (2) überwacht und das anzulegende Stützsignal von der Recheneinheit (7) abgegeben wird.

14. Verfahren nach Anspruch 13, **dadurch gekennzeichnet, dass** die Recheneinheit (7) die eingehende Gleichspannung (U_{E}) überwacht, umfassend den weiteren Verfahrensschritt:
- Aktivieren eines vorbestimmten Betriebsmodus, wenn die eingehende Gleichspannung (U_{E}) einen vorbestimmten, zweiten Schwellenwert unterschreitet, wobei der vorbestimmte Betriebsmodus vorzugsweise einen Abschaltmodus darstellt.

15. Verfahren nach Anspruch 13 oder 14 zum Betrieb einer Schalteinrichtung nach Anspruch 9, umfassend ein Verfahren nach Anspruch 11 zum Betrieb eines Ladeschaltkreises, **dadurch gekennzeichnet, dass** die Recheneinheit (7) das Schaltsignal abgibt.

16. Verfahren zum Betrieb eines USB-Geräts nach Anspruch 10, umfassend ein Verfahren nach Anspruch 15, **dadurch gekennzeichnet, dass** die Recheneinheit (7) das Schaltsignal nach Abschluss der Enumeration abgibt.
